# EUROPÄISCHE PATENTSCHRIFT

(11) **EP 3 501 251 B1**
(45) Veröffentlichungstag und Bekanntmachung des Hinweises auf die Patenterteilung: **06.03.2024**
(21) Anmeldenummer: 18401097.3
(22) Anmeldetag: 07.12.2018
(51) Int. Cl.: A01C 7/20, A01C 15/00, A01B 63/111

(54) **VERTEILMASCHINE**
SORTING MACHINE
ÉPANDEUR

(30) Priorität: 19.12.2017 DE 102017130507
(43) Veröffentlichungstag der Anmeldung: 26.06.2019
(73) Patentinhaber: Amazonen-Werke H. Dreyer SE & Co. KG, 49205 Hasbergen (DE)
(72) Erfinder: Häfker, Gerd, 27305 Süstedt (DE); Hansen, Jörn, 24321 Giekau (DE)

(56) Entgegenhaltungen:
- EP-A2- 0 478 095
- WO-A1-00/59287
- DE-A1- 3 218 385
- DE-A1- 19 954 423
- DE-A1-102010 017 753

## Beschreibung

Die Erfindung betrifft eine Verteilmaschine gemäß dem Oberbegriff des Patentanspruches 1.

Eine derartige Verteilmaschine ist in der EP 0 478 095 A2 offenbart.

Eine weitere beispielhafte Verteilmaschine ist in DE 36 36 768 A1 beschrieben.

Diese Verteilmaschine ist als Teil einer Bestellkombination ausgeführt, hier beispielhaft als Sämaschine ausgestaltet. Die Bestellkombination umfasst im Wesentlichen die Sämaschine und eine Kreiselegge. Das auszubringende Saatgut für die Sämaschine wird hierbei in einem auf einer als Frontwalze ausgebildeten Bodenwalze befestigtem Frontbehälter bevorratet, welche über eine Dreipunktkupplung an der Frontseite eines Ackerschleppers angeordnet sind. Von dort aus wird das Saatgut über eine Fördereinrichtung einem Zwischenbehälter hinter dem Ackerschlepper, und von dort aus den Säscharen hinter der Kreiselegge zugeführt.

Der Frontbehälter ist auf einem Zentralrahmen angeordnet, wobei der Zentralrahmen vor dem Ackerschlepper im Frontanbau des Ackerschleppers getragen wird. Unter dem Frontbehälter ist zudem eine Frontwalze am Zentralrahmen angeordnet. Die Frontwalze erstreckt sich mit ihrer Längsachse quer zur Fahrtrichtung und verfestigt auf dem Boden abrollend die überfahrene Fläche.

Zur Transportfahrt beispielsweise auf öffentlichen Straßen wird insbesondere die Frontwalze vom Boden abgehoben, indem der Zentralrahmen mittels des Frontanbaus in eine erhöhte Position verbracht wird. Um eine sichere Transportfahrt zu gewährleisten, wird der Zentralrahmen zumindest so hoch angehoben, dass unter der Frontwalze eine ausreichende Bodenfreiheit gegeben ist. Folglich ergibt sich für die Transportfahrt die Gesamthöhe des Vorderanbaus aus der Summe von Bodenfreiheit, sowie der Höhe der Frontwalze und des Frontbehälters. Da sich der Frontbehälter quer zur Fahrtrichtung nicht weiter als die Breite eines Ackerschleppers erstrecken sollte, hängt die Behältergröße des Frontbehälters somit im Wesentlichen von seiner Höhe ab.

Zur Vermeidung allzu häufiger Beladevorgänge wird generell ein möglichst großes Fassungsvermögen des Frontbehälters angestrebt. Problematisch ist hierbei allerdings, dass hoch aufbauende Behälter bei Transportfahrten eine unvorteilhafte Sichtfeldeinschränkung im Blickfeld des Fahrers nach vorn verursachen.

Die Aufgabe der Erfindung ist es daher, einen voluminösen Frontbehälter für eine Verteilmaschine mit einem günstigeren Sichtfeld bei Transportfahrten zu schaffen.

Diese Aufgabe wird erfindungsgemäß dadurch gelöst, dass die Verteilmaschine Mittel umfasst, die dazu eingerichtet sind, den Abstand zwischen der Längsachse der Frontwalze und dem Zentralrahmen einzustellen.

Infolge dieser Maßnahme lässt sich die Gesamthöhe des Vorderanbaus einer erfindungsgemäßen Verteilmaschine zumindest während der Transportfahrt in vorteilhafter Weise reduzieren. Durch eine Minderung des Abstandes der Längsachse der Frontwalze zum Zentralrahmen wird bei gleichbleibender Position des Zentralrahmens die Bodenfreiheit erhöht. Wird der Zentralrahmen und somit auch der Frontbehälter zudem abgesenkt, so dass die ursprüngliche Bodenfreiheit wieder hergestellt ist, so ergibt sich für den Fahrer eines Ackerschleppers, der mit einer erfindungsgemäßen Ausführungsform der Verteilmaschine ausgestattet ist, ein günstigeres Sichtfeld. Besonders vorteilhaft ist hierbei ist, dass erfindungsgemäße Ausführungsformen des Frontbehälters gegenüber anderen Frontbehältern ein größeres Fassungsvermögen aufweisen bei gleicher Bodenfreiheit in Transportfahrt und günstigem Sichtfeld. Mit anderen Worten: Der Frontbehälter und die Frontwalze werden zusammengezogen, so dass sich eine komprimierte, kompakte Anordnung ergibt.

In einer vorteilhaften Weiterbildung der Erfindung ist vorgesehen, dass die Frontwalze um eine Schwenkachse schwenkbar am Zentralrahmen angeordnet ist, dass diese Schwenkachse beabstandet von, vorzugweise in Fahrtrichtung vor, der Längsachse der Frontwalze liegt. In dieser Ausführungsform der Erfindung sind die Mittel zum Einstellen des Abstandes dazu eingerichtet eine Schwenkbewegung der Frontwalze zu bewirken. Dies ermöglicht einen besonders einfachen und kompakten Aufbau der Vorrichtung. Weiter vorteilhaft ist, dass diese Weiterbildung ein verbessertes Lenkverhalten gegenüber anderen gattungsgemäßen Frontwalzen, bei denen die Längsachse der Frontwalze nicht hinter der Anlenkung am Zentralrahmen liegt, aufweist. Dies ist dadurch bedingt, dass in der vorliegenden Ausführungsform die Frontwalze gegenüber ihrer Anlenkung am Zentralrahmen gezogen wird und somit einfacher auf Lenkbewegungen des Ackerschleppers reagieren kann.

In einer alternativen vorteilhaften Weiterbildung der Erfindung ist vorgesehen, dass die Frontwalze verschiebbar, vorzugsweise translatorisch verschiebbar, am Zentralrahmen angeordnet ist. In dieser Ausführungsform der Erfindung lassen sich die Mittel zum Einstellen des Abstandes vereinfacht ausführen. Der Aufbau der Vorrichtung zeichnet sich folglich als besonders zweckmäßig und gut handhabbar aus.

In einer weiteren, fortgebildeten Ausführungsform der Verteilmaschine umfassen die Mittel zum Einstellen des Abstands von Frontbehälter und Frontwalze zueinander zumindest eine Verriegelungseinrichtung, wobei die Verriegelungseinrichtung dazu eingerichtet ist, die Lage der Längsachse der Frontwalze in zumindest zwei unterschiedlichen Abständen zum Zentralrahmen zu verriegeln bzw. festzusetzen. In vorteilhafter Weise ist die Verteilmaschine so in zumindest zwei Positionen mittels der Verriegelungseinrichtung gegen ungewolltes Betätigen der Mittel zum Einstellen des Abstandes gesichert. Dies erscheint besonders zweckmäßig, da sowohl während der Bearbeitung von Ackerboden durch Bodenunebenheiten, als auch bei Transportfahrten durch erhöhte Geschwindigkeiten vermehrt Stöße und Vibrationen in die Verteilmaschine eingeleitet werden. Einer Beschädigung der Vorrichtung durch eine außerplanmäßige Verstellung des Abstandes der Längsachse der Frontwalze zum Zentralrahmen ist somit vorgebeugt.

In einer besonders vorteilhaften, fortgebildeten Ausführungsform der Verteilmaschine sind den Positionen der Frontwalze in zumindest zwei unterschiedlichen Abständen der Längsachse der Frontwalze zu dem Zentralrahmen zumindest eine Transportstellung und zumindest eine Arbeitsstellung der Frontwalze zugeordnet. Infolge dieser Maßnahme sind die Mittel zum Einstellen des Abstandes dazu eingerichtet die beiden besonders zweckmäßigen Stellungen der Verteilmaschine einzustellen. Weiter vorteilhaft ist, dass die Verriegelungseinrichtung besonders in den, aus den vorstehend beschriebenen Gründen, kritischen Stellungen seine Schutzwirkung gegen ungewolltes Betätigen der Mittel zum Einstellen des Abstandes entfaltet.

Um die Verriegelungseinrichtung besonders robust und sicher auszuführen ist vorgesehen, dass die Verriegelungseinrichtung als mechanische Verriegelung ausgeführt ist, wobei die mechanische Verriegelung zumindest zwei beabstandet zueinander angeordnete mechanische Anschläge und zumindest ein in der jeweiligen Verriegelungsposition angeordnetes Sicherungselement umfasst. Diese Weiterbildung der Erfindung zeichnet sich dadurch aus, dass die Verriegelungseinrichtung aufgrund der beiden mechanischen Anschläge eine vornehmlich eindeutig zu betätigen ist. Auch einem ungeübten Benutzer ist es so erlaubt eine erfindungsgemäße Verteilmaschine dieser Ausführungsform zwischen Transport- und Arbeitsstellung zu verbringen. Besonders robust ist diese Ausführungsform, da die Verriegelungseinrichtung ein Sicherungselement umfasst, welches speziell dem Festsetzen in Verriegelungsposition dient.

In einer anderen vorteilhaften Weiterbildung ist die Verriegelungseinrichtung als zumindest ein hydraulischer Aktor ausgeführt, wobei der zumindest eine Aktor dazu eingerichtet ist, die Frontwalze zwischen Transportstellung und Arbeitsstellung zu verbringen. Vorteilhaft ist hierbei, dass die Verriegelungseinrichtung in besonders einfacher Weise von der Fahrzeugkabine eines eine erfindungsgemäße Verteilmaschine tragenden Ackerschleppers zu betätigen ist. Der Fahrer muss somit nicht absteigen, um die Frontwalze zwischen Transport- und Arbeitsstellung und umgekehrt zu verbringen. Diese Ausführungsform der Erfindung zeichnet sich folglich durch gesteigerten Comfort bei der Bedienung der Verriegelungseinrichtung aus. Zudem wird die Zeit zum Ab- und Aufsteigen eingespart.

Der Betrieb einer vorstehend beschriebenen Verteilmaschine, wobei die Verriegelungseinrichtung als mechanische Verriegelung ausgeführt ist, zeichnet sich zum Verbringen der Verteilmaschine aus der Transportstellung in die Arbeitsstellung durch die folgenden Verfahrensschritte aus:
a. Absenken des Zentralrahmens über den Frontanbau des Ackerschleppers bis die mechanische Verriegelung einen ersten mechanischen Anschlag erreicht,
b. Lösen der Verriegelung durch Entfernen des zumindest einen Sicherungselementes,
c. Anheben des Zentralrahmens über den Frontanbau des Ackerschleppers bis die mechanische Verriegelung einen zweiten mechanischen Anschlag erreicht,
d. Schließen der Verriegelung durch Einsetzen des zumindest einen Sicherungselementes,
e. Absenken des Zentralrahmens über den Frontanbau des Ackerschleppers bis die Frontwalze auf dem Boden abrollen kann.

Und zum Verbringen der Verteilmaschine aus der Arbeitsstellung in die Transportstellung sind die folgenden Verfahrensschritte kennzeichnend:
f. Anheben des Zentralrahmens über den Frontanbau des Ackerschleppers bis die mechanische Verriegelung einen zweiten mechanischen Anschlag erreicht,
g. Lösen der Verriegelung durch Entfernen des zumindest einen Sicherungselementes,
h. Absenken des Zentralrahmens über den Frontanbau des Ackerschleppers bis die mechanische Verriegelung einen ersten mechanischen Anschlag erreicht,
i. Schließen der Verriegelung durch Einsetzen des zumindest einen Sicherungselementes,
j. Anheben des Zentralrahmens über den Frontanbau des Ackerschleppers bis die Frontwalze ausreichend Bodenfreiheit zur Transportfahrt aufweist.

Zum Verbringen der Verteilmaschine zwischen den beiden Stellungen ist in vorteilhafter Weise somit nur wenig physische Arbeit seitens des Benutzers notwendig, da für die Stellbewegungen der Frontwalze im Wesentlichen die Schwerkraft in Kombination mit dem Frontkraftheber des Ackerschleppers genutzt wird. Lediglich die Verriegelungseinrichtung wird vom Benutzer betätigt.

Weitere Einzelheiten der Erfindung sind der Beispielsbeschreibung und den Zeichnungen zu entnehmen. Die Zeichnungen zeigen
- Fig.1: eine erfindungsgemäße Verteilmaschine, wobei die Frontwalze sich in einem verringerten Abstand zum Zentralrahmen befindet, also in Transportstellung und in Seitenansicht,
- Fig.2: die Verteilmaschine gemäß Fig.1, wobei sich die Frontwalze in einem erhöhten Abstand zum Zentralrahmen befindet, also in Arbeitsposition und in Seitenansicht,
- Fig.3: eine erste Ausführungsform der erfindungsgemäßen Verriegelungseinrichtung in verriegelter Position, wobei der Frontbehälter demontiert ist und die Frontwalze sich in einem verringerten Abstand zum Zentralrahmen befindet, in perspektivischer Ansicht,
- Fig.4: die Verriegelungseinrichtung gemäß Fig.3 in verriegelter Position, wobei sich die Frontwalze in einem erhöhten Abstand zum Zentralrahmen befindet, in perspektivischer Ansicht,
- Fig.5: die Verriegelungseinrichtung gemäß Fig.4 in entriegelter Position, in perspektivischer Ansicht,
- Fig.6: die Verteilmaschine in Transportstellung, in abgesenkter Position mit einem Ackerschlepper in Seitenansicht,
- Fig.7: die Verteilmaschine in Arbeitsstellung, in angehobener Position mit dem Ackerschlepper und dem Sichtfeld nach vorn in Seitenansicht,
- Fig.8: die Verteilmaschine in Arbeitsstellung, in abgesenkter Position mit dem Ackerschlepper in Seitenansicht und
- Fig.9: die Verteilmaschine in Transportstellung, in angehobener Position mit dem Ackerschlepper und dem Sichtfeld nach vorn in Seitenansicht.

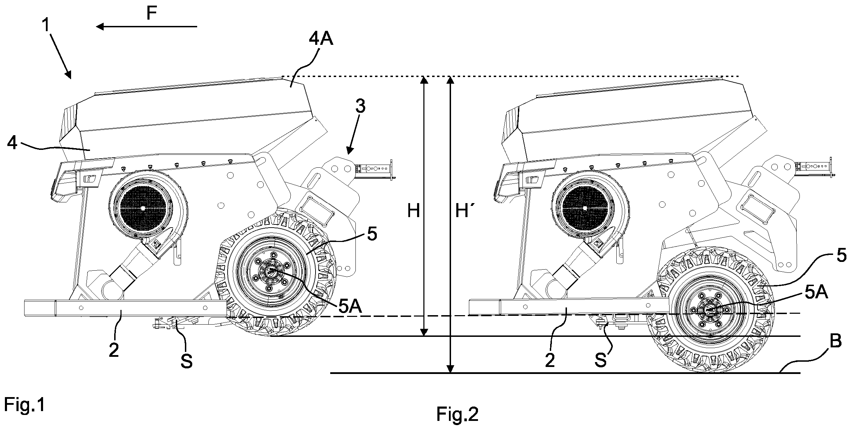

Eine erfindungsgemäße Verteilmaschine 1 mit einem Zentralrahmen 2 ist in Fig. 1 zu sehen. Der Zentralrahmen 2 ist an seinem hinteren Ende mit einer Dreipunktanbindung 3 versehen. Mit Hilfe der Dreipunktanbindung 3 lässt sich der Zentralrahmen 2 im Frontanbau eines hier nicht gezeigten Ackerschleppers anordnen und so in vertikaler Richtung bewegbar tragen. Das heißt der Zentralrahmen 2 kann im Frontanbau des Ackerschleppers angehoben und abgesenkt werden.

Auf dem Zentralrahmen 2 ist zudem ein Frontbehälter 4 angeordnet. Der Frontbehälter 4 wird zur Bevorratung des von der Verteilmaschine 1 auszubringenden Materials genutzt und erstreckt sich quer zur Fahrtrichtung F in etwa über eine Breite die der eines Ackerschleppers entspricht, so dass die gesetzlich zugelassene Höchstbreite nicht überschritten wird. Um das Fassungsvermögen eines solchen Frontbehälters 4 zu vergrößern, würde der Fachmann folglich seine Abmessungen nach vorn und/oder oben vergrößern. Da allerdings eine Vergrößerung des Frontbehälters 4 in Fahrtrichtung F nach vorn den Schwerpunkt der Vorrichtung in ungünstiger Weise nach vorn verschieben würde, ist eine Steigerung der Behälterhöhe vorzuziehen. Um das Fassungsvermögen des Frontbehälters 4 in vorteilhafter Weise zu vergrößern, ist dieser daher mit einem Behälteraufbau 4A versehen.

Des Weiteren ist der Zentralrahmen 2 mit einer vorzugsweise als Reifenpacker 5 ausgebildeten Frontwalze versehen. Der Reifenpacker 5 erstreckt sich mit seiner Längsachse 5A ebenfalls quer zur Fahrtrichtung F. Auf dem Boden B abrollend verdichtet der Reifenpacker 5 die Ackerfläche vor dem Ackerschlepper. Eine Gesamthöhe H der Verteilmaschine 1 ergibt sich folglich als Strecke in vertikaler Richtung vom obersten Punkt des Behälteraufbaus 4A bis zum untersten Punkt des Reifenpackers 5.

Wie Fig. 1 und 2 verdeutlichen, umfasst die Verteilmaschine 1 Mittel, die dazu eingerichtet sind, den Abstand zwischen der Längsachse 5A des Reifenpackers 5 und dem Zentralrahmen 2 einzustellen. Die Fig.1 zeigt eine Verteilmaschine 1 mit verringertem Abstand zwischen der Längsachse 5A des Reifenpackers 5 und dem Zentralrahmen 2 und somit einer minimierten Gesamthöhe H, also in Transportstellung. Die Fig.2 hingegen zeigt eine Verteilmaschine 1 mit einem vergrößerten Abstand zwischen der Längsachse 5A des Reifenpackers 5 und dem Zentralrahmen 2 und somit einer gesteigerten Gesamthöhe H`, also in Arbeitsstellung. Die Frontwalze ist hier gegenüber dem Frontbehälter 3 also abgesenkt. Also ist der Position der Verteilmaschine 1 in Fig.1 mit der minimierten Gesamthöhe H die Transportstellung zugeordnet und die Position der Verteilmaschine 1 in Fig.2 mit der vergrößerten Gesamthöhe H` entspricht der Arbeitsstellung.

Zur Anpassung des Abstandes seiner Längsachse 5A zum Zentralrahmen 2 ist der Reifenpacker 5 um eine Schwenkachse S schwenkbar am Zentralrahmen 2 angeordnet. Die Schwenkachse S erstreckt sich in dieser Ausführungsform parallel zu der Längsachse 5A des Reifenpackers 5 und befindet sich in Fahrtrichtung F vor der Längsachse 5A am Zentralrahmen 2. Der Reifenpacker 5 wird somit hinter seiner Anbindung am Zentralrahmen 2 gezogen, wodurch ein besonders günstiges Lenkverhalten erreicht wird. In einer alternativen, nicht gezeigten Ausführungsform ist der Reifenpacker 5 verschiebbar, vorzugsweise translatorisch verschiebbar, am Zentralrahmen 2 angeordnet.

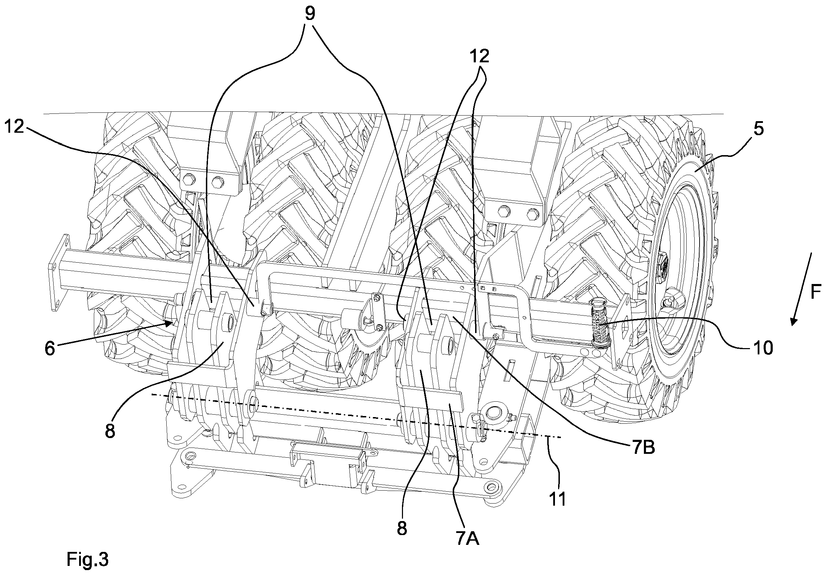

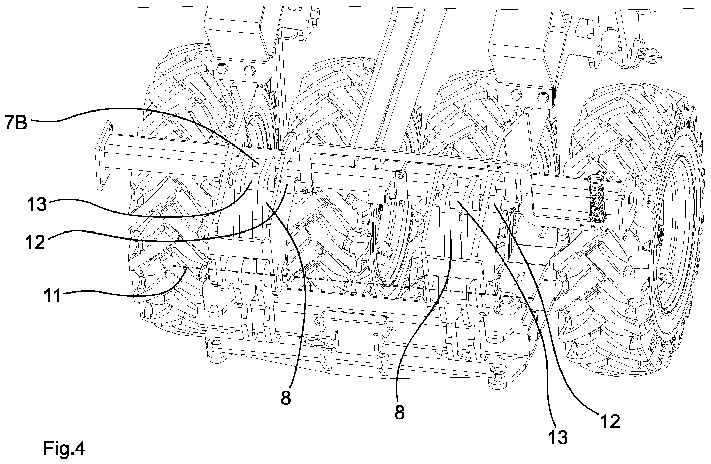

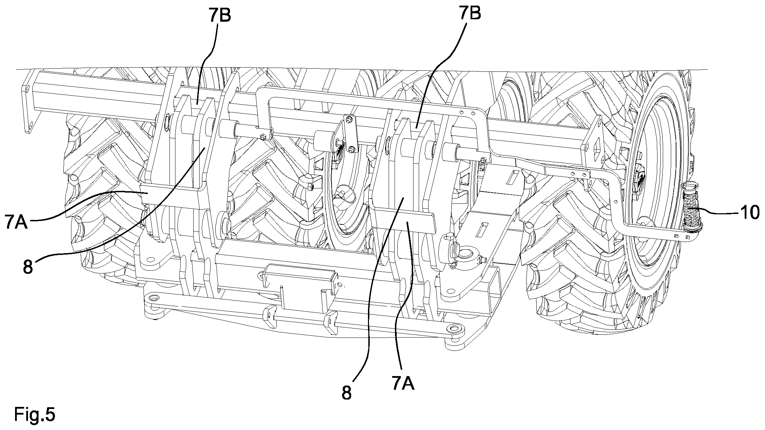

Zum Einstellen des Abstandes zwischen der Längsachse 5A des Reifenpackers 5 und dem Zentralrahmen 2 umfassen die geeigneten Mittel eine Verriegelungseinrichtung 6, die in Fig. 3 zu sehen ist. In dieser Darstellung und den Fig.4 und 5 ist aus Zwecken der Übersichtlichkeit der Frontbehälter 4 nicht montiert. Mittels der Verriegelungseinrichtung 6 kann die Verteilmaschine 1 in Arbeits- und Transportstellung jeweils verriegelt werden, so dass die jeweilige Stellung festgesetzt ist.

Die Verriegelungseinrichtung 6 ist in der Ausführungsform gemäß Fig. 3, 4 und 5 als mechanische Verriegelung ausgeführt und umfasst im Wesentlichen insgesamt vier beabstandet zueinander angeordnete mechanische Anschläge 7, wobei diese sich je Seite in jeweils einen ersten Anschlag 7A und einen gegenüberliegenden zweiten Anschlag 7B aufteilen, je einen Schwenkhebel 8 pro Seite und ein Sicherungselement 9. Des Weiteren umfasst die Verriegelungseinrichtung 6 einen Handgriff 10 zur ihrer Betätigung.

In Fig.3 befindet sich die Verteilmaschine 1 in Transportstellung, d.h. die Frontwalze ist in Richtung des Frontbehälters 3 eingezogen, wie auch in Fig.1 dargestellt, wobei die Verriegelungseinrichtung 6 nicht betätigt ist und die Transportstellung so festsetzt. Die Schwenkhebel 8 sind an ihrem oberen Ende mit einer Aufnahme 13 versehen und befinden sich in einer nahezu aufrechten Stellung. Die Position der Schwenkhebel 8 ist durch nicht näher gezeigte Mittel an die Lage der Längsachse 5A des Reifenpackers 5 zum Zentralrahmen 2 gekoppelt. Die aufrechte Stellung der Schwenkhebel 8 geht folglich mit einem reduzierten Abstand der Längsachse 5A des Reifenpackers 5 zum Zentralrahmen 2 einher. Wird dieser Abstand vergrößert, das heißt der Reifenpacker 5 schwenkt um die Schwenkachse S nach unten, bewirkt dies eine Kippbewegung der Schwenkhebel 8 um eine Drehachse 11 entgegen der Fahrtrichtung F. Da sich die Verriegelungseinrichtung 6 allerdings im nicht betätigten Zustand befindet, wird diese Kippbewegung der Schwenkhebel 8, und somit die Schwenkbewegung des Reifenpackers 5 um die Schwenkachse S, durch die Sicherungselemente 9 verhindert. Die Sicherungselemente 9 befinden sich in Fahrtrichtung F nicht verschiebbar, hinter den Schwenkhebeln 8 in dafür vorgesehenen Buchsen 12 und verhindern so die Verbringung der Verteilmaschine 1 aus der Transport- in die Arbeitsstellung.

In Fig.4 befindet sich die Verteilmaschine 1 in Arbeitsstellung, d.h. die Frontwalze ist gegenüber dem Frontbehälter 3 abgesenkt, wie auch in Fig.2 dargestellt ist, wobei die Verriegelungseinrichtung 6 nicht betätigt ist. Die Schwenkhebel 8 befinden sich in einer um die Drehachse 11 gekippten Position, was aufgrund der nicht gezeigten Mittel zur Kopplung gleichbedeutend ist mit einem vergrößerten Abstand der Längsachse 5A des Reifenpackers 5 zum Zentralrahmen 2. Die Arbeitsstellung wird durch die Verriegelungseinrichtung 6 festgesetzt, indem das Sicherungselement 9 durch die Buchsen 12 und die buchsenartigen Aufnahmen 13 in den Schwenkhebeln 8 hindurch geführt ist. Eine Kippbewegung der Schwenkhebel 8 wird somit durch das Sicherungselement 9 verhindert und die Arbeitsstellung ist somit verriegelt.

Um die Verriegelungseinrichtung 6 mittels des Handgriffes 10 zu betätigen, muss das Sicherungselement 9 entlastet sein. Das Sicherungselement 9 ist entlastet, wenn sich die Schwenkhebel 8 in Anlage an die ersten Anschläge 7A oder an die zweiten Anschläge 7B befinden. Um die Schwenkhebel 8 in Anlage an die zweiten Anschläge 7B zu bringen kann die Verteilmaschine 1 in Arbeitsstellung angehoben werden. Die Schwerkraft bewirkt, dass der Reifenpacker 5 solange um die Schwenkachse S schwenkt und somit die Schwenkhebel 8 um die Drehachse 11 kippt bis die Schwenkhebel 8 den zweiten Anschlag 7B erreichen. Die Gewichtskraft des Reifenpackers 5 stützt sich nun, was die Verriegelungseinrichtung 6 betrifft, auf den zweiten Anschlägen 7B ab, so dass der Handgriff 10 leicht betätigbar ist. Zur Betätigung ist der Handgriff 10 nach außen zu ziehen, so dass sich das Sicherungselement 9 aus den Aufnahmen 13 heraus verschiebt, wie es in Fig.5 zu sehen ist. Eine Kippbewegung der Schwenkhebel 8 um die Drehachse 11 wird somit nicht länger durch das Sicherungselement 9 verhindert, so dass die Verteilmaschine 1 verbracht werden kann.

Die Verteilmaschine 1 in Fig.5 befindet sich folglich in Arbeitsstellung, wobei die Verriegelungseinrichtung 6 betätigt ist. Eine Kippbewegung der Schwenkhebel 8 um die Drehachse 11 und somit eine Schwenkbewegung des Reifenpackers 5 um die Schwenkachse S ist somit nicht verhindert. Um die Verteilmaschine 1 in die Transportstellung zu verbringen kann sie in einfacher Weise so lang abgesenkt werden, bis die Schwenkhebel 8 sich in Anlage an die ersten Anschläge 7A befinden. Sobald die Schwenkhebel 8 sich in Anlage an die ersten Anschläge 7A befinden, kann die Verriegelungseinrichtung 6 festgesetzt werden, indem der Handgriff 10 nach Innen gedrückt wird. Dies bewirkt, dass die Transportstellung der Verteilmaschine 1 gemäß Fig.3 eingenommen wird. In einer alternativen, nicht gezeigten Ausführungsform ist vorstellbar, dass die Verriegelungseinrichtung 6 als zumindest ein hydraulischer Aktor ausgeführt ist. In dieser Ausführungsform würden die Schwenkbewegungen, anstatt durch das Anheben bzw. Absenken der Verteilmaschine 1, durch den hydraulischen Aktor ausgeführt. Dieser müsste hierzu in geeigneter Weise zwischen der Schwenkachse S und der Längsachse 5A des Reifenpackers 5 angeordnet sein.

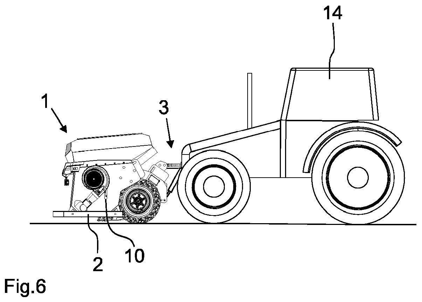

Zur Verdeutlichung des Betriebes der vorstehend beschriebenen Verteilmaschine 1, insbesondere der mechanischen Verriegelungseinrichtung 6, dienen die Fig.6 bis 9. Die Figuren zeigen die vorstehend beschriebene Ausführungsform der Verteilmaschine 1, in der die Verriegelungseinrichtung 6 als mechanische Verriegelung ausgeführt ist. Die Verteilmaschine 1 ist mittels der Dreipunktanbindung 3 im Frontanbau eines Ackerschleppers 14 angeordnet. Ein Benutzer kann die Verteilmaschine 1 somit im Frontanbau seines Ackerschleppers 14 anheben und absenken.

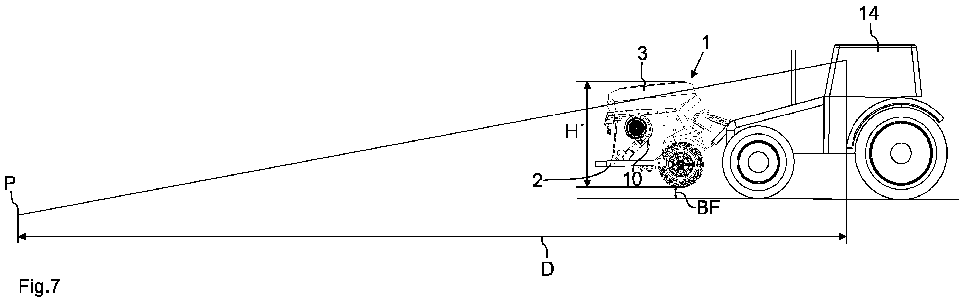

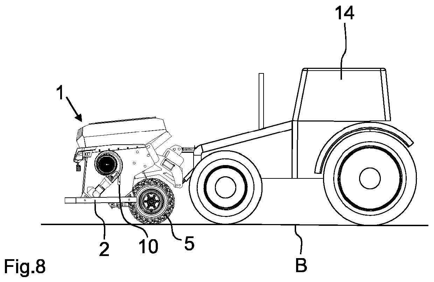

Zum Verbringen der Verteilmaschine 1 aus der Transportstellung in die Arbeitsstellung sind die folgenden Verfahrensschritte notwendig:
- Absenken des Zentralrahmens 2 über den Frontanbau des Ackerschleppers 14 bis die mechanische Verriegelung (hier: die Schwenkhebel 8) die ersten mechanischen Anschläge 7A erreicht, wie es in Fig.6 bzw. 3 zu sehen ist;
- Lösen der Verriegelung durch Entfernen des zumindest einen Sicherungselementes 9, indem der Handgriff 10 nach außen gezogen wird;
- Anheben des Zentralrahmens 2 über den Frontanbau des Ackerschleppers 14 bis die mechanische Verriegelung (hier: die Schwenkhebel 8) die zweiten mechanischen Anschläge 7B erreicht, wie es in Fig. 7 zu sehen ist;
- Schließen der Verriegelung durch Einsetzen des zumindest einen Sicherungselementes 9, indem der Handgriff 10 in seine Ursprungsposition zurück geschoben wird, wie in Fig.4 dargestellt;
- Absenken des Zentralrahmens 2 über den Frontanbau des Ackerschleppers 14 bis der Reifenpacker 5 auf dem Boden B abrollen kann, wie es in Fig. 8 zu sehen ist.

Die Verteilmaschine 1 befindet sich, wie in Fig. 8 zu sehen ist, in Arbeitsstellung und ist verriegelt, so dass der Reifenpacker 5 auf dem Boden B abrollen kann. Durch die auftretenden Bodenbearbeitungskräfte werden die Schwenkhebel 8 gegen das Sicherungselement 9 gedrückt, so dass dieses belastet ist. Die Verriegelungseinrichtung 6 hemmt sich somit selbst, so dass eine ungewollte Betätigung durch Erschütterungen o. A. verhindert wird.

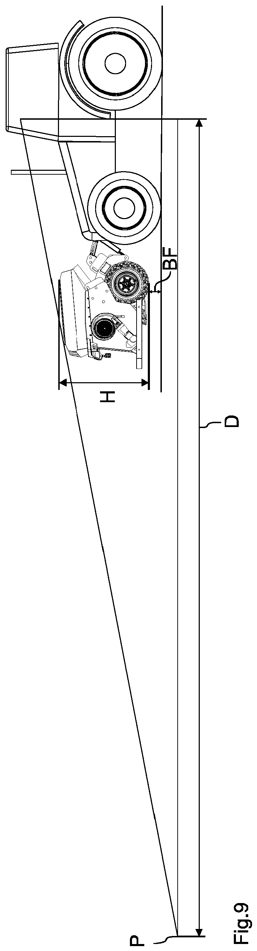

Zum Verbringen der Verteilmaschine 1 aus der Arbeitsstellung in die Transportstellung sind die folgenden Verfahrensschritte notwendig:
- Anheben des Zentralrahmens 2 über den Frontanbau des Ackerschleppers 14 bis die mechanische Verriegelung (hier: die Schwenkhebel 8) die zweiten mechanischen Anschläge erreicht, wie es in Fig.7 bzw. 4 zu sehen ist;
- Lösen der Verriegelung durch Entfernen des zumindest einen Sicherungselementes 9, indem der Handgriff 10 nach außen gezogen wird, wie in Fig. 5 dargestellt;
- Absenken des Zentralrahmens 2 über den Frontanbau des Ackerschleppers 14 bis die mechanische Verriegelung (hier: die Schwenkhebel 8) die ersten mechanischen Anschläge 7A erreicht, wie es in Fig.6 zu sehen ist;
- Schließen der Verriegelung durch Einsetzen des zumindest einen Sicherungselementes 9, indem der Handgriff 10 in seine Ursprungsposition zurück geschoben wird, wie in Fig.3 dargestellt;
- Anheben des Zentralrahmens 2 über den Frontanbau des Ackerschleppers 14 bis der Reifenpacker 5 ausreichend Bodenfreiheit BF zur Transportfahrt aufweist, wie es in Fig.9 zu sehen ist.

Ein wesentlicher Vorteil der erfindungsgemäßen Vorrichtung und dem zugehörigen Verfahren wird deutlich bei Vergleich der Fig.7 und 9. Beide Figuren zeigen denselben Ackerschlepper 14 mit im Frontanbau getragener Verteilmaschine 1, wobei die Verteilmaschine 1 mit einer in beiden Figuren identischen Bodenfreiheit BF über dem Boden B getragen wird. Zudem ist das Sichtfeld eines Fahrers des Ackerschleppers 14 auf einen Punkt P, der in einer Distanz D vor dem Ackerschlepper 14 liegt, angedeutet.

Gattungsgemäße Verteilmaschinen wiesen bisher den Nachteil auf, dass hochaufragende Frontbehälter 3 bei der Transportfahrt ins Sichtfeld des Fahrers ragen, wie Fig.7 verdeutlicht. Durch die vorliegende Erfindung und das zugehörige Verfahren ist eine Verteilmaschine 1 geschaffen, die einen voluminösen Frontbehälter 3 aufweist, bei gleichzeitig günstigerem Sichtfeld während Transportfahrten, wie Fig. 9 verdeutlicht. Dies wird im Wesentlichen dadurch erreicht, dass der Reifenpacker 5 zwischen Arbeits- und Transportstellung verbracht werden kann und sich seine Gesamthöhe H so bei Transportfahrten minimieren lässt. Infolge dieser Maßnahme ragt die Verteilmaschine 1 in Fig.9 wesentlich weniger in das Sichtfeld des Fahrers bei identischer Bodenfreiheit BF.

### Bezugszeichenliste

- F: Fahrtrichtung
- B: Boden
- H, H`: Gesamthöhe
- S: Schwenkachse
- BF: Bodenfreiheit
- P: Punkt
- D: Distanz
- 1: Verteilmaschine
- 2: Zentralrahmen
- 3: Dreipunktanbindung
- 4: Frontbehälter
- 4A: Behälteraufbau
- 5: Reifenpacker
- 5A: Längsachse
- 6: Verriegelungseinrichtung
- 7: Anschlag
- 7A: erster Anschlag
- 7B: zweiter Anschlag
- 8: Schwenkhebel
- 9: Sicherungselement
- 10: Handgriff
- 11: Drehachse
- 12: Buchse
- 13: Aufnahme
- 14: Ackerschlepper

## Patentansprüche

1. Verteilmaschine (1) mit einem Zentralrahmen (2), wobei der Zentralrahmen (2) in vertikaler Richtung bewegbar im Frontanbau eines Ackerschleppers (14) getragen wird, und an dem Zentralrahmen (2) zumindest ein Frontbehälter (3) und zumindest eine vorzugsweise als Reifenpacker (5) ausgebildete auf dem Boden (B) abrollende Frontwalze angeordnet ist, wobei die Längsachse (5A) der Frontwalze sich quer zur Fahrtrichtung (F) erstreckt, **dadurch gekennzeichnet, dass** die Verteilmaschine (1) Mittel umfasst, die dazu eingerichtet sind, den vertikalen Abstand zwischen der Längsachse (5A) der Frontwalze und dem Zentralrahmen (2) einzustellen.

2. Verteilmaschine (1) nach Anspruch 1, wobei die Frontwalze um eine Schwenkachse (S) schwenkbar am Zentralrahmen (2) angeordnet ist, dass diese Schwenkachse (S) beabstandet von, vorzugweise in Fahrtrichtung vor, der Längsachse (5A) der Frontwalze liegt.

3. Verteilmaschine (1) nach Anspruch 1, wobei die Frontwalze verschiebbar, vorzugsweise translatorisch verschiebbar, am Zentralrahmen (2) angeordnet ist.

4. Verteilmaschine (1) nach zumindest einem der vorstehenden Ansprüche, wobei die Mittel zum Einstellen des Abstands zumindest eine Verriegelungseinrichtung (6) umfassen, dass die Verriegelungseinrichtung (6) dazu eingerichtet ist, die Lage der Längsachse (5A) der Frontwalze in zumindest zwei unterschiedlichen Abständen zum Zentralrahmen (2) zu verriegeln und/oder festzusetzen.

5. Verteilmaschine (1) nach zumindest einem der vorstehenden Ansprüche, wobei den Positionen der Frontwalze in zumindest zwei unterschiedlichen Abständen der Längsachse (5A) der Frontwalze zu dem Zentralrahmen (2) zumindest eine Transportstellung und zumindest eine Arbeitsstellung der Frontwalze zugeordnet sind.

6. Verteilmaschine (1) nach zumindest einem der vorstehenden Ansprüche, wobei die Verriegelungseinrichtung (6) als mechanische Verriegelung ausgeführt ist, dass die mechanische Verriegelung zumindest zwei beabstandet zueinander angeordnete mechanische Anschläge (7A, 7B) und zumindest ein in der jeweiligen Verriegelungsposition angeordnetes Sicherungselement (9) umfasst.

7. Verteilmaschine (1) nach zumindest einem der Ansprüche 1 bis 5, wobei die Verriegelungseinrichtung (6) als zumindest ein hydraulischer Aktor ausgeführt ist, dass der zumindest eine Aktor dazu eingerichtet ist, die Frontwalze zwischen Transportstellung und Arbeitsstellung zu verbringen.

8. Verfahren zum Betreiben der Verteilmaschine (1) nach zumindest einem der Ansprüche 1 bis 6, **gekennzeichnet durch** die folgenden Verfahrensschritte:
Zum Verbringen der Verteilmaschine (1) aus der Transportstellung in die Arbeitsstellung
a. Absenken des Zentralrahmens (2) über den Frontanbau des Ackerschleppers (14) bis die mechanische Verriegelung einen ersten mechanischen Anschlag (7A) erreicht,
b. Lösen der Verriegelung durch Entfernen des zumindest einen Sicherungselementes (9),
c. Anheben des Zentralrahmens (2) über den Frontanbau des Ackerschleppers (14) bis die mechanische Verriegelung einen zweiten mechanischen Anschlag (7B) erreicht,
d. Schließen der Verriegelung durch Einsetzen des zumindest einen Sicherungselementes (9),
e. Absenken des Zentralrahmens (2) über den Frontanbau des Ackerschleppers (14) bis die Frontwalze auf dem Boden (B) abrollen kann;
und zum Verbringen der Verteilmaschine (1) aus der Arbeitsstellung in die Transportstellung
f. Anheben des Zentralrahmens (2) über den Frontanbau des Ackerschleppers (14) bis die mechanische Verriegelung einen zweiten mechanischen Anschlag (7B) erreicht,
g. Lösen der Verriegelung durch Entfernen des zumindest einen Sicherungselementes (9),
h. Absenken des Zentralrahmens (2) über den Frontanbau des Ackerschleppers (14) bis die mechanische Verriegelung einen ersten mechanischen Anschlag (7A) erreicht,
i. Schließen der Verriegelung durch Einsetzen des zumindest einen Sicherungselementes (9),
j. Anheben des Zentralrahmens (2) über den Frontanbau des Ackerschleppers (14) bis die Frontwalze ausreichend Bodenfreiheit (BF) zur Transportfahrt aufweist.

## Claims

1. Spreading machine (1) having a central frame (2), the central frame (2) being carried in the front attachment of a tractor (14) so as to be movable in the vertical direction, and at least one front container (3) and at least one front roller, which is preferably designed as a tire packer (5) and which rolls on the ground (B), being arranged on the central frame (2), the longitudinal axis (5A) of the front roller extending transversely to the direction of travel (F), **characterized in that** the spreading machine (1) comprises means designed to adjust the vertical distance between the longitudinal axis (5A) of the front roller and the central frame (2).

2. Spreading machine (1) according to claim 1, wherein the front roller is arranged on the central frame (2) so as to be pivotable about a pivot axis (S), wherein said pivot axis (S) lies at a distance, preferably upstream in the direction of travel, from the longitudinal axis (5A) of the front roller.

3. Spreading machine (1) according to claim 1, wherein the front roller is arranged so as to be movable, preferably translationally movable, on the central frame (2).

4. Spreading machine (1) according to at least one of the preceding claims, wherein the means for adjusting the distance comprise at least one locking device (6), wherein the locking device (6) is designed to lock and/or fix the position of the longitudinal axis (5A) of the front roller at at least two different distances from the central frame (2).

5. Spreading machine (1) according to at least one of the preceding claims, wherein at least one transport position and at least one working position of the front roller are associated with the positions of the front roller at at least two different distances of the longitudinal axis (5A) of the front roller from the central frame (2).

6. Spreading machine (1) according to at least one of the preceding claims, wherein the locking device (6) is designed as a mechanical locking means, wherein the mechanical locking means comprises at least two mechanical stops (7A, 7B) arranged at a distance from one another and at least one securing element (9) arranged in the relevant locking position.

7. Spreading machine (1) according to at least one of claims 1 to 5, wherein the locking device (6) is designed as at least one hydraulic actuator, wherein the at least one actuator is designed to move the front roller between the transport position and the working position.

8. Method for operating the spreading machine (1) according to at least one of claims 1 to 6, **characterized by** the following method steps:
in order to move the spreading machine (1) from the transport position into the working position,
a. lowering the central frame (2) over the front attachment of the tractor (14) until the mechanical locking means reaches a first mechanical stop (7A),
b. releasing the locking means by removing the at least one securing element (9),
c. raising the central frame (2) over the front attachment of the tractor (14) until the mechanical locking means reaches a second mechanical stop (7B),
d. closing the locking means by inserting the at least one securing element (9),
e. lowering the central frame (2) over the front attachment of the tractor (14) until the front roller can roll on the floor (B);
and in order to move the spreading machine (1) from the working position into the transport position,
f. raising the central frame (2) over the front attachment of the tractor (14) until the mechanical locking means reaches a second mechanical stop (7B),
g. releasing the locking means by removing the at least one securing element (9),
h. lowering the central frame (2) over the front attachment of the tractor (14) until the mechanical locking means reaches a first mechanical stop (7A),
i. closing the locking means by inserting the at least one securing element (9),
j. lifting the central frame (2) over the front attachment of the tractor (14) until the front roller has sufficient ground clearance (BF) for transport.

## Revendications

1. Épandeur (1) comportant un châssis central (2), dans lequel le châssis central (2) est porté de manière mobile dans la direction verticale dans l'attelage frontal d'un tracteur agricole (14), et au moins un récipient frontal (3) et au moins un rouleau frontal réalisé de préférence sous forme de tasse-avant à pneus (5) et roulant sur le sol (B) sont disposés sur le châssis central (2), dans lequel l'axe longitudinal (5A) du rouleau frontal s'étend transversalement au sens de déplacement (F), **caractérisé en ce que** l'épandeur (1) comprend un moyen conçu pour régler la distance verticale entre l'axe longitudinal (5A) du rouleau frontal et le châssis central (2).

2. Épandeur (1) selon la revendication 1, dans lequel le rouleau frontal est disposé sur le châssis central (2) de manière à pouvoir pivoter autour d'un axe de pivotement (S), en ce que ledit axe de pivotement (S) est situé à distance de l'axe longitudinal (5A) du rouleau frontal, de préférence devant celui-ci dans le sens de déplacement.

3. Épandeur (1) selon la revendication 1, dans lequel le rouleau frontal est disposé sur le châssis central (2) de manière à pouvoir être déplacé, de préférence de manière à pouvoir être déplacé en translation.

4. Épandeur (1) selon au moins l'une des revendications précédentes, dans lequel le moyen permettant de régler la distance comprend au moins un dispositif de verrouillage (6), en ce que le dispositif de verrouillage (6) est conçu pour verrouiller et/ou fixer l'emplacement de l'axe longitudinal (5A) du rouleau frontal à au moins deux distances différentes par rapport au châssis central (2).

5. Épandeur (1) selon au moins l'une des revendications précédentes, dans lequel au moins une position de transport et au moins une position de travail du rouleau frontal sont associées aux positions du rouleau frontal à au moins deux distances différentes de l'axe longitudinal (5A) du rouleau frontal par rapport au châssis central (2).

6. Épandeur (1) selon au moins l'une des revendications précédentes, dans lequel le dispositif de verrouillage (6) est conçu sous forme de verrouillage mécanique, en ce que le verrouillage mécanique comprend au moins deux butées mécaniques (7A, 7B) disposées à distance l'une de l'autre et au moins un élément de blocage (9) disposé dans la position de verrouillage respective.

7. Épandeur (1) selon au moins l'une des revendications 1 à 5, dans lequel le dispositif de verrouillage (6) est conçu sous forme d'au moins un actionneur hydraulique, en ce que l'au moins un actionneur est conçu pour faire passer le rouleau frontal entre la position de transport et la position de travail.

8. Procédé permettant de faire fonctionner l'épandeur (1) selon au moins l'une des revendications 1 à 6, **caractérisé par** les étapes de procédé suivantes :
pour le passage de l'épandeur (1) de la position de transport à la position de travail
a. abaissement du châssis central (2) au-dessus de l'attelage frontal du tracteur agricole (14) jusqu'à ce que le verrouillage mécanique atteigne une première butée mécanique (7A),
b. libération du verrouillage par retrait de l'au moins un élément de blocage (9),
c. soulèvement du châssis central (2) au-dessus de l'attelage frontal du tracteur agricole (14) jusqu'à ce que le verrouillage mécanique atteigne une seconde butée mécanique (7B),
d. fermeture du verrouillage par insertion de l'au moins un élément de blocage (9),
e. abaissement du châssis central (2) au-dessus de l'attelage frontal du tracteur agricole (14) jusqu'à ce que le rouleau frontal puisse rouler sur le sol (B) ;
et pour le passage de l'épandeur (1) de la position de travail à la position de transport
f. soulèvement du châssis central (2) au-dessus de l'attelage frontal du tracteur agricole (14) jusqu'à ce que le verrouillage mécanique atteigne une seconde butée mécanique (7B),
g. libération du verrouillage par retrait de l'au moins un élément de blocage (9),
h. abaissement du châssis central (2) au-dessus de l'attelage frontal du tracteur agricole (14) jusqu'à ce que le verrouillage mécanique atteigne une première butée mécanique (7A),
i. fermeture du verrouillage par insertion de l'au moins un élément de blocage (9),
j. soulèvement du châssis central (2) au-dessus de l'attelage frontal du tracteur agricole (14) jusqu'à ce que le rouleau frontal présente une garde au sol (BF) suffisante pour le transport.
